Europäisches Patentamt

European Patent Office

Office européen des brevets

(11) Publication number: **0 505 011 A1**

## EUROPEAN PATENT APPLICATION

(21) Application number: **92200817.2**

(22) Date of filing: **20.03.92**

(51) Int. Cl.5: **B09B 3/00**

(30) Priority: **22.03.91 BE 9100270**

(43) Date of publication of application:
**23.09.92 Bulletin 92/39**

(84) Designated Contracting States:
**AT BE CH DE DK ES FR GB GR IT LI LU MC NL PT SE**

(71) Applicant: **OOSTERHOF HOLMAN MILIEUTECHNIEK B.V.**
**Kievitsweg 13**
**NL-9843 HA Grijpskerk(NL)**

(72) Inventor: **Noordstrand, Theodorus Johannes Maria**
**Bildwei 1A**
**NL-9221 SH Rottevalle(NL)**

(74) Representative: **'t Jong, Bastiaan Jacobus et al**
**OCTROOIBUREAU ARNOLD & SIEDSMA**
**Sweelinckplein 1**
**NL-2517 GK 's-Gravenhage(NL)**

(54) Method and device for cleaning a contaminated ground area.

(57) The invention relates to a method for in situ cleaning of a contaminated ground area (1), comprising pumping up contaminated groundwater out of the ground area at a number of places (3) at a predetermined volume per time unit in accordance with the degree of contamination of each place, extracting the contaminants from the groundwater and discharging (6) the cleaned groundwater optionally into or close to the ground area (1), wherein the contaminated groundwater is periodically pumped up successively at at least several of the places (3) at a fixed pump capacity and for a controlled time duration.

FIG.3

EP 0 505 011 A1

The present invention relates to a method for in situ cleaning of a contaminated ground area, wherein contaminated groundwater is pumped up out of the ground area at a number of places. The pumped-up groundwater is treated and carried away, optionally by re-infiltrating it in the ground area in question.

Before the method is applied it is determined through measurements at what flow rate the groundwater has to be pumped up at each place so that the contamination is extracted in controlled manner over the area.

In a known like method a pumping well is drilled at each location, in which well a pump is arranged which is adjusted in accordance with the determined specific flow rate for this particular location. Adjustment normally takes place by throttling feed or discharge. After the pumps are thus installed they remain functioning continuously and unchanged for a considerable time until the contamination has decreased to below the set limits.

Due to the throttling the pumps operate at a low output so that a comparatively large amount of energy is lost.

The method according to the invention operates at a markedly high output. According to the invention the groundwater is pumped up at each position at a fixed pump capacity corresponding with the maximum output of the associated pump. The groundwater is not however pumped up continuously at all locations, but successively and for a determined time duration such that over a particular period on average no more than the predetermined volume per time unit is pumped up.

The method can be employed with separate pumps in each pumping well, wherein these pumps are then adjusted to their optimum capacity and switched on periodically by a control device for a time duration to be determined empirically and thereafter repeated in a programmed manner.

In accordance with a further favourable development the method can be performed using one pumping device which is successively coupled to each of the pumping wells for the relevant controlled time durations. Since a single central pumping device can hereby suffice for a number of wells, a cost saving can be achieved.

A favourable further development of the method according to the invention is characterized in claim 3. The empirical adjustment of the installation with which the method is performed can hereby be dispensed with and it is moreover possible to determine much more precisely that the desired volume per time unit is indeed adhered to for each pumping well.

It can calculated very simply in advance which volume has to be pumped up at each place in one cycle. In each cycle one pumping well at a time is subsequently switched on and the pumped up flow rate is measured. As soon as the pumped up flow rate total corresponds with the determined value the relevant pumping well is switched off and a following pumping well is set into operation.

Claim 4 characterizes a further favourable development of the method according to the invention. By drawing off ground air a better inflow of groundwater is obtained on the one hand while on the other volatile components of the contamination are drawn off with the exhausted ground air, which components can be removed from the air with a suitable treatment. Exhausting of the ground air can also be initiated after pumping up of contaminated groundwater has already been in progress for some time. The groundwater level will thereby have fallen slightly at that location, whereby the ground air is also exhausted from ground layers which normally lie beneath groundwater level so that volatile constituents of contaminants can also be removed from these ground layers in an efficient manner.

The invention also relates to and provides a device for in situ cleaning of a contaminated ground area as characterized in claim 5. The control device can be embodied in economic manner when it is based on a PLC, that is, a programmable logic control device. By making use of a programmable control device the adjustment values can be altered very simply so that for instance when it is found after a period of time that relatively too much or too little groundwater is being pumped up from one particular pumping well the setting therefor can easily be adapted in relation to the changed conditions.

Further favourable embodiments of the device according to the invention will be found in the remaining claims.

Figure 1 shows schematically a situation outline of a gas or oil extraction site wherein a device according to the invention is installed for in situ cleaning of a contaminated ground area.

Figure 2 shows a diagram of the device according to the invention used in figure 1.

Figure 3 shows schematically a pumping well as used in the device according to the invention.

Figure 4 shows schematically a ground air exhaust well as used in the device according to the invention.

Figure 5 shows a diagram of another embodiment of the device according to the invention.

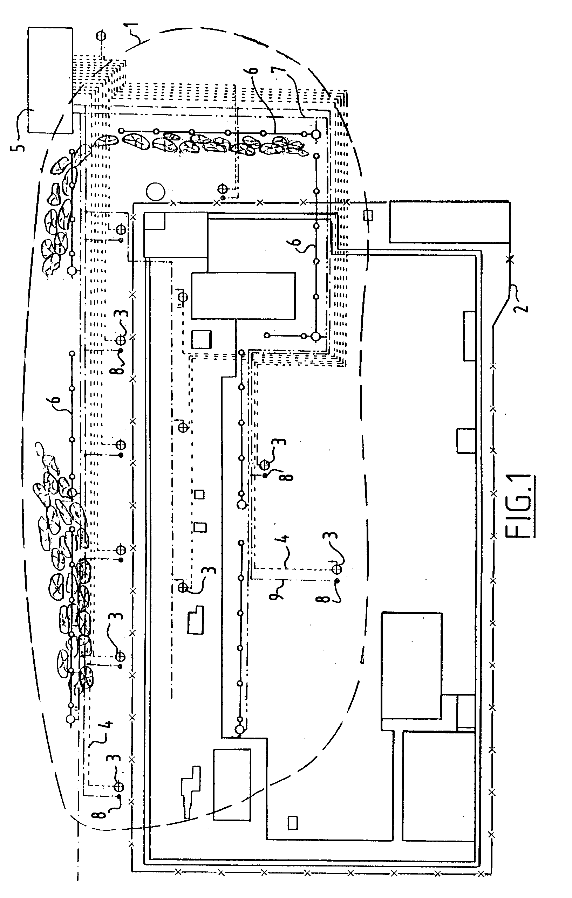

Designated with 1 in figure 1 is a contaminated ground area. The contamination originates from the site 2 which contains a gas or oil extraction well and wherein used and/or released liquids have penetrated into the ground.

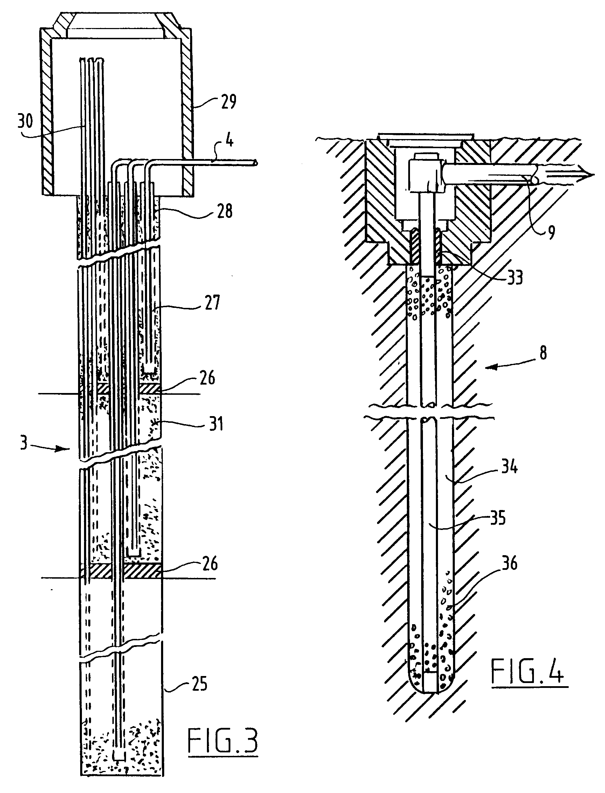

In order to now remove this contamination from the ground a number of pumping wells 3 are drilled, wherein the construction will be elucidated with reference to figure 3. Each pumping well 3 is connected via a pipe 4 designated with a dashed line to a room area 5 in which are disposed pumping means as well as a purifying installation for treating the pumped-up groundwater.

After the water has been treated it is carried in water pipes designated with dash double-dot lines 7 back to infiltration pits designated with 6. The specific construction of the infiltration 6 forms no part of the invention and will not therefore be described here in detail. It is sufficient for the description to note that the cleaned water is discharged, for instance as shown, onto the contaminated ground area.

Drilled close to each pumping well 3 is a ground air exhaust well 8 to be further described with reference to figure 4 and which is likewise connected, using pipes 9 designated in figure 1 with dash-dot lines, to the room area 5 in which an air exhaust pump is placed.

Figure 2 shows schematically how the device is connected.

The pumping wells 3 are, as stated above, connected via pipes 4 to one central pump designated 12 in figure 2. Pump 12 is a vacuum pump and has a suction tube 11 consisting in figure 2 of two parts. Suction tube 11 is provided with a number of branches in each of which a closing valve 10 is received. Each pipe 4 of a pumping well 3 is connected to one closing valve 10. Received in the suction tube 11 is a flow rate meter 13 through which flows all the groundwater delivered via each of the closing valves 10. Since in figure 2 a divided suction tube 11 is shown, two flow rate meters 13 are in this case also arranged.

The flow rate meter is connected via a control line to the control device 17. This preferably contains a PLC. The closing valves 10 can be opened selectively by the control device 17. For this purpose a control line 15 runs to each of the closing valves 10.

As described above, the quantity of groundwater that has to be pumped up per time unit is determined in advance for each pumping well 3 in order to achieve an optimum cleaning of the ground area. Using this data it is determined how much groundwater per pumping well has to be pumped up per cycle duration maintained by the control device 17.

At the start of the cycle defined by the control device 17 one closing valve 10 is first opened. The control device monitors how much groundwater is drawn up on the basis of the signal from the flow rate meter 13. As soon as the quantity of groundwater determined for the cycle duration has been drawn up out of the relevant pumping well 3 the associated closing valve 10 is closed and the following closing valve 10 opened, which is in turn closed after it has been determined using the signal from flow rate meter 13 that the correct amount of groundwater for the relevant pumping well has been pumped up. All closing valves 10 are thus successively opened one by one for a determined time.

Since in the embodiment of figure 2 the suction tube 11 takes a divided form and two flow rate meters 13 are applied, two pumping wells 3 can be in operation simultaneously, one that is connected to the left-hand branch of suction tube 11 and one connected to the right-hand branch of suction tube 11.

The drawn up contaminated groundwater is carried away by the discharge pipe 14 to the treatment installation, not further shown here, which extracts the contaminants from the groundwater. The cleaned groundwater is again further discharged after cleaning.

In addition to the groundwater pump 12 embodied as a vacuum pump the device shown in figure 2 also contains an air exhaust pump 22. This air pump 22 is provided in analogous manner with a central exhaust pipe 21 having a number of branchings with a remotely controllable closing valve 20. The closing valves 20 are controlled by the control device 17. A suitable programming of the control device 17 is selected for controlling the closing valves 20 and therefore the point in time at which the relevant ground air exhaust wells are set into operation and therewith the duration. The closing valves 20 and 10 of the associated ground air exhaust wells and pumping wells can thus be operated synchronously. It is also possible to open the closing valves 20 some time after the closing valve 10 of the associated well and to close it some time thereafter.

By using a programmable control device for the control device 17 an optimum co-action can thus be achieved of the per se known ground air exhaust and raising of the groundwater.

In the discharge pipe of air pump 22 is likewise received a flow rate meter 23 which is connected via a signal line 24 to the control device 17. It is hereby possible to determine how much air is exhausted. This can of course take place momentarily for each specific well but a total can also be ascertained.

Figure 3 shows schematically the construction of a pumping well which in fact consists of three pumping wells as described above. A bore hole 25 is divided by concrete closures 26 into three sections lying one above another. Inserted into each of these sections is a rise tube 27 in a perforated tube 28 surrounded by filter sand 31. These rise tubes 27 are connected to the above mentioned pipes 4. A level monitoring tube 30 is moreover arranged for each of the sections. A concrete well brim 29 is arranged over the head of the rise tubes 27 so that the tubes remain accessible.

Each of the rise pipes 27 is connected via its own pipe 4 to a closing valve 10 so that for each section the desired quantity of groundwater can be pumped up in controlled manner.

Figure 4 shows schematically the construction of a ground air exhaust well 8. This well comprises a bore hole 34 in which is arranged a perforated suction tube 35 enveloped by filter gravel 36. At the top end the bore hole 34 is closed using a concrete sealing 33. The tube 35 is connected via the above described pipe 9 and closing valve 20 to the central exhaust tube 21 of the air pump 22.

The method and device according to the invention have the additional advantage that in a situation as shown in figure 1 all equipment is situated outside the site 2 where there are strict requirements with respect to explosion safety of equipment used. In principle, only pipes are located within the boundary of the site 2. Closing valves, pumps, control devices and the like are all accommodated outside the site 2 in the room area 5. The use of expensive embodiments complying with the strict explosion safety requirements is therefore not required for this equipment. In the previously known device, wherein in each pumping well a separate pump is accommodated which can be switched on and off using a switch placed close to the pumping well, expensive, explosion-proof embodiments must be used for both the pumps and the switches.

The invention is not however limited to use with a central pump unit which can operate the different pumping wells by means of switchable closing valves.

The invention can also be applied with advantage in those cases where it is desired to place a separate pump in each pumping well. The necessity for separate pumps occurs for instance when groundwater has to be pumped up from a depth of about 10 metres.

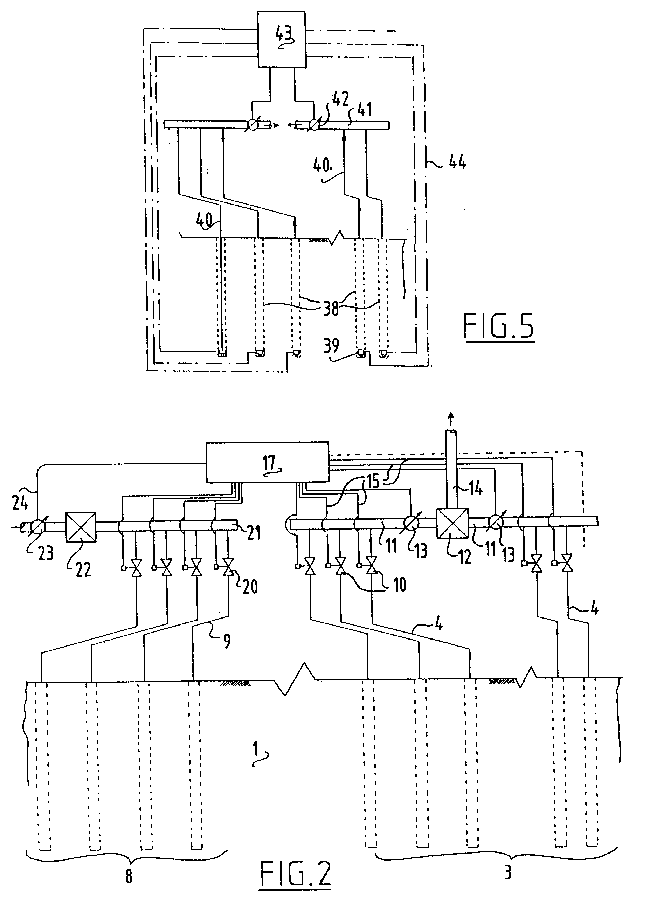

Application of the invention in such a device is shown schematically in figure 5.

A separate pump 39 is placed in each case at the bottom of the schematically depicted pumping wells 38. Each pump 39 is connected via a pressure pipe 40 to a manifold pipe 41. In figure 5 this manifold pipe is embodied in two parts. Received in each part is a flow rate meter 42 through which flows all the groundwater delivered via the pipes 40 connected to that part. The flow rate meter 42 is connected via a signal line to the control device 33 which can once again operate the pumps 39 via feed lines 44. The control device is once again for instance a programmable control device which successively switches on the different pumps 39 in a cycle. Each pump 39 is switched on for as long as necessary to pump up a determined amount of groundwater. This amount is determined using the flow rate meter 42 and is set in a programmed manner in the control device 43.

The placing of the flow rate meter is otherwise not restricted to the options shown in figures 2 and 5. A manifold pipe may consist of more than two parts each with a flow rate meter, but a flow rate meter may also be received in each pressure pipe 40 or suction pipe 4. The choice depends on the conditions.

After a time it may be found that the original settings which were based on the preceding inspection do not result in an optimal pumping up of groundwater, and the optimal setting can once again be obtained simply by suitably reprogramming the control device 43.

The control devices 17 and 43 can further contain recording means which record how much groundwater is pumped up out of each well during the total operational duration of the device. On the basis of tests of samples of the pumped up groundwater it can be established from this data for instance whether the cleaning process is proceeding as originally anticipated or whether supplementary steps or another programming are required.

**Claims**

1. Method for in situ cleaning of a contaminated ground area, comprising pumping up contaminated groundwater out of the ground area at a number of places at a predetermined volume per time unit in accordance with the degree of contamination of each place, extracting the contaminants from the groundwater and discharging the cleaned groundwater optionally into or close to the ground area, wherein the contaminated groundwater is periodically pumped up successively at at least several of the places at a fixed pump capacity and for a controlled time duration.

2. Method as claimed in claim 1, wherein use is made of one pumping device which is connected successively to each of the several places for the associated controlled time duration.

3. Method as claimed in claim 1 or 2, wherein from the beginning of the time duration the flow rate of the groundwater pumped up in the relevant place is measured and the time duration is deemed ended as soon as a determined total volume has been pumped up.

4. Method as claimed in claim 1 or 3, wherein close to each place ground air is exhausted out of the ground in time relation to the pumping up of contaminated groundwater.

5. Device for in situ cleaning of a contaminated ground area comprising a number of pumping wells in the ground area, pumping means co-acting with each pumping well for pumping up contaminated groundwater out of the pumping well in the activated situation thereof, a control device connected to the pumping means and provided with a program switch member for successively activating the pumping means for each pumping well for a set time duration.

6. Device as claimed in claim 5, wherein the pumping means comprise a manifold pipe through which flows the groundwater pumped up out of each pumping well and in which is received a flow rate meter which is connected to the control device.

7. Device as claimed in claim 5 or 6, wherein the pumping means comprise a central pump with a suction tube comprising a number of branchings for individual opening by switchable closing valves, wherein each pumping well is connected via a pipe to one of the branchings and the closing valves are operated by the control device.

8. Device as claimed in any of the claims 5-7, comprising close to at least a number of the pumping wells a ground air exhaust well and central air pumping means with an air exhaust tube comprising a number of branchings for individual opening by switchable closing valves, wherein each ground air exhaust well is connected via a pipe to one of the closing valves and the closing valves are operated by the control device.

9. Device as claimed in claim 8, wherein in the exhaust tube or a discharge tube a flow rate meter is received which is connected to the control device.

10. Device as claimed in claim 6, wherein the control device comprises recording means for recording for each pumping well the total aggregate volume of pumped-up groundwater measured with the flow rate meter.

11. Device as claimed in any of the claims 7-10, wherein the contaminated ground area is situated in a site where strict requirements apply with respect to explosion safety of equipment, such as a site where oil or gas is extracted, and wherein the pumping means and control device are disposed outside this site.

FIG.1

FIG.3

FIG.4

FIG.5

FIG.2

European Patent Office

EUROPEAN SEARCH REPORT

Application Number

EP 92 20 0817

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 155 768 (FOSTER WHEELER ENERGY CORP.)  <br> * page 4, line 22 - page 8, line 17; figures * | 1,5 | B09B3/00 |
| A | | 2,3,6,7 | |
| X | EP-A-0 329 500 (MENARD-SOLTRAITEMENT S.A.)  <br> * column 4, line 46 - column 6, line 40 *  <br> * column 7, line 19 - line 34; figures * | 5 | |
| Y | | 1 | |
| A | | 2,6,7 | |
| Y | AT-B-379 120 (GURSCHNER)  <br> * page 2, line 34 - page 3, line 34 *  <br> * page 4, line 34 - page 5, line 26; figures * | 1 | |
| A | | 5 | |
| A | US-A-4 593 760 (VISSER ET AL)  <br><br> * column 4, line 47 - column 5, line 50 *  <br> * column 6, line 9 - line 26; figures * | 1,3,4,5, 8 | |
| A | US-A-4 435 292 (KIRK ET AL)  <br><br> * the whole document * | 1,2,5,6, 7,11 | TECHNICAL FIELDS SEARCHED (Int. Cl.5) |
| A | WO-A-9 002 101 (CHEVRON RESEARCH COMP.)  <br> * page 9, line 8 - line 30; figures * | 4,8,9 | B09B  <br> C02F |
| A | DE-C-3 544 697 (SCHNEIDER)  <br> * column 3, line 24 - line 31 *  <br> * column 3, line 67 - column 4, line 5; figure * | | |

The present search report has been drawn up for all claims

| Place of search | Date of completion of the search | Examiner |
|---|---|---|
| THE HAGUE | 22 JUNE 1992 | VAN DER ZEE W.T. |